(19) Europäisches Patentamt
European Patent Office
Office européen des brevets

(11) **EP 3 726 053 B1**

(12) **EUROPÄISCHE PATENTSCHRIFT**

(45) Veröffentlichungstag und Bekanntmachung des Hinweises auf die Patenterteilung:
**27.10.2021 Patentblatt 2021/43**

(21) Anmeldenummer: **20168608.6**

(22) Anmeldetag: **08.04.2020**

(51) Int Cl.:
*F04B 1/12* (2020.01)          *F16H 61/431* (2010.01)
*F04B 49/06* (2006.01)        *F04B 49/00* (2006.01)
*F04B 17/05* (2006.01)        *F04B 1/324* (2020.01)
*F04B 1/295* (2020.01)        *F16H 61/47* (2010.01)

(54) **AXIALKOLBENPUMPE FÜR EINEN HYDROSTATISCHEN FAHRANTRIEB, HYDROSTATISCHER FAHRANTRIEB MIT DER AXIALKOLBENPUMPE, SOWIE VERFAHREN ZUR STEUERUNG**

AXIAL PISTON PUMP FOR HYDROSTATIC DRIVE, HYDROSTATIC DRIVE WITH AXIAL PISTON PUMP, AND CONTROL METHOD

POMPE À PISTON AXIAL POUR UN ENTRAÎNEMENT HYDROSTATIQUE, ENTRAÎNEMENT HYDROSTATIQUE POURVU DE PISTON AXIAL AINSI QUE PROCÉDÉ DE COMMANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.04.2019 DE 102019205505**

(43) Veröffentlichungstag der Anmeldung:
**21.10.2020 Patentblatt 2020/43**

(73) Patentinhaber: **Robert Bosch GmbH**
**70442 Stuttgart (DE)**

(72) Erfinder:
• **Mutschler, Steffen**
  **89233 Neu-Ulm (DE)**
• **Lenzgeiger, Ulrich**
  **86424 Dinkelscherben (DE)**
• **Mayer, Jochen**
  **89537 Giengen An Der Brenz (DE)**
• **Bender, Frank**
  **70190 Stuttgart (DE)**

(56) Entgegenhaltungen:
EP-A1- 2 123 948          EP-A1- 2 865 923
DE-A1-102017 207 570     US-A1- 2010 024 409
US-A1- 2015 336 609      US-A1- 2016 265 520

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine hydrostatische Axialkolbenpumpe für einen hydrostatischen Fahrantrieb für eine mobile Arbeitsmaschine gemäß dem Oberbegriff des Patentanspruchs 1, einen entsprechenden hydrostatischen Fahrantrieb gemäß Anspruch 10, sowie ein Verfahren zur Steuerung der Axialkolbenpumpe gemäß Patentanspruch 11.

Es sind hydrostatische Fahrantriebe, insbesondere für mobile Arbeitsmaschinen bekannt, bei denen eine hydrostatische Axialkolbenpumpe und ein oder mehrere hydrostatische Motoren in einem geschlossenen hydraulischen Kreis miteinander verbunden sind. Die Pumpe wird von einer Antriebsmaschine, beispielsweise einem Verbrennungs-, insbesondere Dieselmotor, einer Elektromaschine oder einem Hybridantrieb angetrieben und die Motoren wiederum treiben beispielsweise Räder oder Achsen oder Ketten der mobilen Arbeitsmaschine an.

Die Axialkolbenpumpe ist häufig in ihrem Hubvolumen verstellbar. So kann beispielsweise bei konstanter Drehzahl der Antriebsmaschine der geförderte Druckmittelvolumenstrom im geschlossenen Kreis verändert werden, so dass eine Abtriebsdrehzahl der Motoren und damit eine Fahrgeschwindigkeit der mobilen Arbeitsmaschine verstellt werden kann.

Aus dem Stand der Technik sind Abtriebsdrehzahlregelungen und Regler mit einer Rückführung der Verstellung des Hubvolumens der Axialkolbenpumpe (sogenannte EP-Pumpen) bekannt. Im Falle von Axialkolbenpumpen in Schrägscheibenbauweise wird dabei ein Ist-Schwenkwinkel der Schrägscheibe rückgeführt.

Auch sind aus dem Stand der Technik drehzahlabhängige (DA) Verstelleinheiten für Axialkolbenpumpen bekannt, bei denen ein Regelventil einen Stelldruck erzeugt, der abhängig von der Antriebsdrehzahl der Axialkolbenpumpe und vom Arbeitsdruck im hydraulischen Kreis ist. Der Stelldruck wird durch ein elektromagnetisch betätigbares 4/3-Wegeventil den beiden gegenwirkenden Stellkammern des Stellzylinders der Axialkolbenpumpe zugeführt. Durch die Abhängigkeit des Stelldrucks vom Arbeitsdruck ist eine Lastsensitivität gegeben, die für einen geforderten geschwindigkeitsgeführten Betrieb des Fahrantriebes nachteilig sein kann.

Eine alternative Steuerung des Fördervolumens der Axialkolbenpumpe ist als elektrisch, direkt gesteuerte Verstellung (ET) bekannt. Hierbei sind für jeden der zwei einander entgegenwirkenden Stelldruckräume des Stellzylinders der Axialkolbenpumpe jeweils ein unabhängig, elektrisch ansteuerbares Druckreduzierventil vorgesehen. Jedem Druckreduzierventil ist dabei eine Durchflussrichtung der Axialkolbenpumpe zugeordnet. Der von den Druckreduzierventilen eingestellte, jeweilige Stelldruck ist proportional zur vorgewählten Stromstärke der Ansteuerung. Auch hier gilt, dass sich das Fördervolumen nicht nur in Abhängigkeit des Ansteuerstroms, sondern auch der Drehzahl und des Arbeitsdrucks einstellt.

Eine Axialkolbenpumpe aus dem Stand der Technik ist in der Druckschrift EP 2 123 948 A1 offenbart.

Nachteilig an der ET- oder DA-geregelten Pumpe ist, dass keine exakte Geschwindigkeitsführung bei variierender Last möglich ist.

Bei Verwendung der EP-geregelten Pumpe entstehen hohe Kosten durch mechanische Rückführung des Ist-Schwenkwinkels, sowie ein zusätzlicher Aufwand bei der Inbetriebnahme zur Kompensation von Rückstellkräften an der Schwenkwiege.

Die ET-geregelte Pumpe kann ergänzend mit einer Vorsteuerung zur Kompensation von Störgrößen vorgesehen sein. Allerdings ist auch hier eine Genauigkeit schwer zu erreichen, da Parameter und Kennfelder nicht mit ausreichender Genauigkeit bekannt sind. Es entsteht ein hoher Parametrierungsaufwand bei Inbetriebnahme.

Wird die ET-geregelte Pumpe mit einer zusätzlichen Regelung zur Kompensation der Störgrößen verwendet, ist eine Dynamik der Verstellung gering. Zudem muss eine Messeinrichtung für den Schwenkwinkel vorgesehen sein.

Für die ET-geregelte Pumpe kann die genannte Vorsteuerung und die Regelung auch kombiniert werden. Allerdings führt ein Ausfall der Messeinrichtung dann zu einer verringerten Genauigkeit der Geschwindigkeitsführung. Das Fahrverhalten des Fahrantriebs könnte sich verändern, wenn Komponenten verschleißen. Zudem ist ein Parametrierungsaufwand bei Inbetriebnahme hoch.

Dem gegenüber liegt der Erfindung die Aufgabe zugrunde, eine hydrostatische Axialkolbenpumpe für einen geschwindigkeitsgeführten hydrostatischen Fahrantrieb für eine mobile Arbeitsmaschine zu schaffen, die bei variierender Last eine robuste Geschwindigkeitsführung bei gleichzeitig geringem vorrichtungstechnischem Aufwand ermöglicht. Weiterhin besteht die Aufgabe darin, einen entsprechenden hydrostatischen Fahrantrieb, sowie ein Verfahren zur Steuerung der Axialkolbenpumpe, insbesondere des hydrostatischen Fahrantriebs zu schaffen.

Die erste Aufgabe wird gelöst durch eine hydrostatische Axialkolbenpumpe mit den Merkmalen des Patentanspruchs 1, die zweite durch einen hydrostatischen Fahrantrieb mit den Merkmalen des Patentanspruchs 10 und die dritte durch ein Verfahren mit den Merkmalen des Patentanspruchs 11.

Weitere vorteilhafte Ausgestaltungen der Erfindungen sind in den jeweils abhängigen Patentansprüchen beschrieben.

Eine Axialkolbenpumpe für einen geschwindigkeitsgeführten, hydrostatischen Fahrantrieb hat ein verstellbares Hubvolumen und ist zur ist zur fluidischen Verbindung mit einem Hydromotor in, insbesondere geschlossenem, hydraulischem Kreis vorgesehen. Zur Verstellung des Hubvolumens der Axialkolbenpumpe ist eine Verstelleinheit vorgesehen, die einen Stellzylinder mit einer ersten Stelldruckkammer hat, in der über ein erstes Druckreduzierventil ein erster Stelldruck einstellbar ist. Dieser ist abhängig von einem ersten Strom an einem ersten Elektromagneten des ersten Druckreduzierventils. Zudem ist eine elektronische Steuereinrichtung vorgesehen, in der ein Modell des ersten Stroms in unmittelbarer oder mittelbarer Abhängigkeit von einer angeforderten Geschwindigkeit des Fahrantriebes abgelegt ist. Erfindungsgemäß weist die Axialkolbenpumpe eine Lern- und / oder Anpassungseinrichtung auf, die derart ausgestaltet ist, dass über sie in Abhängigkeit des ersten Stroms und einer diesem zuordenbaren oder zugeordneten Ist-Geschwindigkeit des Fahrantriebes das Modell, insbesondere wenigstens ein Parameter oder Kennfeld des Modells, anpassbar ist.

Durch einen Lern- und Anpassungseffekt kann im Zuge einer Lern- oder Anpassungsphase das Modell immer stärker verfeinert werden, sodass es zunehmend präziser wird. Dies kann so weit gehen, dass auf eine Regelung weitgehend oder sogar vollständig verzichtet werden kann. Damit einher geht, dass eine hohe Präzision und Fahrdynamik erreichbar ist und gleichzeitig eine Gefahr des Schwingens eines Regelkreises reduziert oder null ist, was zu höherer Systemrobustheit führt. Bei vollständigem Wegfall einer Regelung kann sogar auf dafür herkömmlicher Weise notwendige Erfassungseinrichtungen oder Abschätzeinrichtungen verzichtet werden, was den Aufwand verringert. Zudem ermöglicht die Lern- und/ oder Anpassungseinrichtung einen verringerten Aufwand bei Inbetriebnahme durch Erlernen der korrekten Kennfeld- oder Modellparameter.

Insbesondere zur Realisierung einer geschwindigkeitsgeführten Fahrt auch in entgegengesetzter Richtung und/oder eines Schleppbetriebs zumindest in einer der beiden Fahrtrichtungen, weist in einer Weiterbildung der Stellzylinder eine der ersten Stelldruckkammer entgegenwirkende, zweite Stelldruckkammer auf, in der über ein zweites Druckreduzierventil in genannter Weise ein zweiter Stelldruck einstellbar ist, der abhängig von einem zweiten Strom an einem zweiten Elektromagneten des zweiten Druckreduzierventils ist. Dabei enthält das in der elektronischen Steuereinrichtung abgelegte Modell zusätzlich ein Modell des zweiten Stroms in unmittelbarer oder mittelbarer Abhängigkeit der angeforderten Geschwindigkeit. Zudem ist die Anpassungseinrichtung vorzugsweise derart ausgestaltet, dass über sie in Abhängigkeit des zweiten Stroms und der diesem zuordenbaren oder zugeordneten Ist-Geschwindigkeit das Modell des zweiten Stroms, insbesondere wenigstens ein Parameter oder Kennfeld dieses Modells, anpassbar ist. Der bereits erwähnte Vorteil ergibt sich so auch für die andere Fahrtrichtung und alle möglichen Zug- und Schleppbetriebsrichtungen oder -arten.

Die folgenden Weiterbildungen sind aus Gründen der Übersichtlichkeit vorzugsweise bezüglich der ersten Stelldruckkammer, des ersten Druckreduzierventils, ersten Stelldrucks, ersten Stroms, ersten Elektromagneten und des Modells des ersten Stroms formuliert. Sie gelten aber selbstverständlich auch alternativ oder ergänzend für die zweite Stelldruckkammer, das zweite Druckreduzierventil, den zweiten Stelldruck, zweiten Strom, zweiten Elektromagneten und das Modell des zweiten Stroms.

In einer Weiterbildung hat die Axialkolbenpumpe eine Regeleinrichtung, über die eine Abweichung der Ist-Geschwindigkeit von der angeforderten Geschwindigkeit ausregelbar ist. Alternativ oder ergänzend ist über die Regeleinrichtung eine Abweichung eines erfassten oder abgeschätzten Ist-Wertes - von welchem die Ist-Geschwindigkeit abhängig ist - von einem dem Ist-Wert zuordenbaren oder zugeordneten, angeforderten Wert, ausregelbar. Dieser abgeschätzte Ist-Wert ist insbesondere ein Ist-Schwenkwinkel der Axialkolbenpumpe, sofern sie in Schrägachsen- oder Schrägscheibenbauweise ausgeführt ist. Der angeforderte Wert ist dann insbesondere ein angeforderter Schwenkwinkel.

In anderen Worten kann die Regeleinrichtung derart ausgestaltet sein, dass ihr Regeleingriff auf Geschwindigkeitsebene und / oder auf Schwenkwinkel- oder Verdrängungsvolumenebene wirksam ist.

Insbesondere wenn Kennwerte des Hydromotors in der Steuereinrichtung abgelegt sind, ist der angeforderte Schwenkwinkel in einer Variante aus der angeforderten Geschwindigkeit und einer Volumenstrombilanz der Axialkolbenpumpe und des Hydromotors und in einer ergänzenden oder alternativen Variante aus einem Kennfeld ermittelbar. Letztgenannte Variante ermöglicht die Berücksichtigung von Leckage und damit des Wirkungsgrades der Axialkolbenpumpe und des Hydromotors.

Die genannte Bilanz lautet für die angeforderte Geschwindigkeit $v_{Soll}$ und den daraus resultierenden angeforderten Schwenkwinkel $\alpha_{P,Soll}$ der Axialkolbenpumpe:

$$\frac{v_{Soll}}{U_{Rad}} = n_{M,Soll}; n_{M,Soll} \cdot V_M = Q_{M,Soll}; Q_{M,Soll} = Q_{P,Soll}; \frac{Q_{P,Soll}}{n_P} = V_{P,Soll}; \frac{V_{P,Soll}}{V_{P,max}} \cong \alpha_{P,Soll} \Rightarrow \alpha_{P,Soll}$$

Analog lautet für die Ist-Geschwindigkeit $v_{Ist}$ und den daraus resultierenden, abgeschätzten Ist-Schwenkwinkel $\alpha_{P,Est}$ die Bilanz:

$$\frac{v_{Ist}}{U_{Rad}} = n_{M,Ist} \Rightarrow n_{M,Ist} \cdot V_M = Q_{M,Ist} \Rightarrow Q_{M,Ist} = Q_{P,Ist} \Rightarrow \frac{Q_{P,Ist}}{n_P} = V_{P,Ist} \Rightarrow \frac{V_{P,Ist}}{V_{P,max}} \cong \alpha_{P,Ist} \Rightarrow \alpha_{P,Est}$$

In einer Weiterbildung ist eine Eingangsgröße der Regeleinrichtung der angeforderte Schwenkwinkel, sowie der aus der Bilanz oder dem Kennfeld abgeschätzte Ist-Schwenkwinkel der Axialkolbenpumpe.

Für die Abschätzung des Ist-Schwenkwinkels der Axialkolbenpumpe ist in einer Weiterbildung ein "Beobachter" oder eine Abschätzeinrichtung vorgesehen, in dem oder die genannte Bilanz oder das Kennfeld zur Auswertung abgelegt ist. Alternativ oder ergänzend kann eine Erfassungseinrichtung zur Erfassung des Ist-Schwenkwinkels der Axialkolbenpumpe vorgesehen sein, was zu einem präziseren Ergebnis als die Abschätzung führt.

In einer Weiterbildung sind erste Ausgabewerte der Regeleinrichtung und der Steuereinrichtung bezüglich des ersten Stroms über einen ersten Operator zum ersten Strom verknüpfbar oder verknüpft. So ergänzen oder summieren sich die ersten Ausgabewerte über den ersten Operator zum ersten Strom. Alternativ oder ergänzend sind zweite Ausgabewerte über einen zweiten Operator zum zweiten Strom verknüpfbar oder verknüpft, sodass sich die zweiten Ausgabewerte zum zweiten Strom ergänzen oder summieren.

In einer Weiterbildung ist die Anpassungseinrichtung derart ausgestaltet, dass über sie in Abhängigkeit des ersten Stroms und der dieser zuordenbaren oder zugeordneten Ist-Geschwindigkeit auch ein Modell der Regeleinrichtung, insbesondere wenigstens ein Parameter oder Kennfeld dieses Modells, anpassbar ist. Alternativ oder ergänzend ist die Anpassungseinrichtung derart ausgestaltet, dass über sie in Abhängigkeit des zweiten Stroms und der diesem zuordenbaren oder zugeordneten Ist-Geschwindigkeit ein Modell der Regeleinrichtung, insbesondere wenigstens ein Parameter oder Kennfeld dieses Modells, anpassbar ist.

In einer Weiterbildung ist die Anpassungseinrichtung derart ausgestaltet, dass über sie das Modell der Steuereinrichtung und ein Modell der Regeleinrichtung derart anpassbar sind, dass ein erster Ausgabewert der Regeleinrichtung minimierbar, nahe null oder null ist. Alternativ oder ergänzend ist die Anpassungseinrichtung derart ausgestaltet, dass über sie das Modell der Steuereinrichtung und ein Modell der Regeleinrichtung derart anpassbar sind, dass ein zweiter Ausgabewert der Regeleinrichtung minimierbar, nahe null oder null ist.

In einer Weiterbildung ist die Regeleinrichtung automatisiert oder durch einen Bediener deaktivierbar, insbesondere im Anschluss an einen Anpassungsbetrieb oder eine Inbetriebnahme. Vorzugsweise hat die Regeleinrichtung einen Bereitschaftsmodus. Insbesondere weist dieser eine fortlaufende Kontrolle der Abweichung auf, sodass ein (Wieder-) Eingreifen der Regeleinrichtung oberhalb einer vorbestimmten Schwelle der Abweichung, jederzeit möglich ist.

In einer Weiterbildung ist die Anpassungseinrichtung automatisiert oder durch einen Bediener deaktivierbar, insbesondere im Anschluss an einen Anpassungsbetrieb oder eine Inbetriebnahme. Vorzugsweise hat die Anpassungseinrichtung einen Bereitschaftsmodus. Insbesondere weist dieser eine fortlaufende Kontrolle der Abweichung auf, sodass eine (Wieder-) Aufnahme der Anpassung des Modells oder der Modelle, beispielsweise im Falle lebenszyklusbedingter Alterung der Axialkolbenpumpe, des Hydromotors und/oder des hydraulischen Kreises, jederzeit möglich ist.

In einer Weiterbildung hat die Anpassungseinrichtung für die Anpassung eine Abbruchbedingung zumindest in Abhängigkeit des ersten Stroms und der zuordenbaren oder zugeordneten Ist-Geschwindigkeit. Alternativ oder ergänzend weist die Anpassungseinrichtung für die Anpassung eine Abbruchbedingung zumindest in Abhängigkeit des zweiten Stroms und der zuordenbaren oder zugeordneten Ist-Geschwindigkeit auf.

In einer Weiterbildung hat das jeweilige Modell jeweils einen statischen Anteil und einen dynamischen Anteil, wobei die Anpassungseinrichtung auf einen der Anteile oder auf beide anpassend einwirken kann.

Vorzugsweise hat die Axialkolbenpumpe wenigstens ein Bedienelement zur Erfassung der angeforderten Geschwindigkeit, insbesondere ein Fahrpedal oder ein Fahrjoystick, oder zumindest eine Schnittstelle für genanntes Bedienelement. Zudem können weitere Bedienelemente wie Fahrtrichtungsschalter, Fahrbereichsauswahlschalter, Inch-Pedal oder Cruise Control - oder entsprechende Schnittstellen - vorgesehen sein.

Vorzugsweise sind die Anpassungseinrichtung, die Steuereinrichtung und ggf. die Regeleinrichtung und/oder der Beobachter zu einer Steuereinheit, insbesondere baulich und/oder logisch, zusammengefasst.

Vorzugsweise ist die oder sind die oben genannten Schnittstellen an der Steuereinheit vorgesehen.

Vorzugsweise hat die Steuereinheit eine, insbesondere mit der oder den Schnittstellen verbundene oder signalverbundene, Interpretations- oder Ermittlungseinrichtung, über die eine Stellung des Fahrpedals und / oder anderer Bedienelemente interpretierbar ist oder sind, woraus die angeforderte Geschwindigkeit ableitbar ist.

In einer Weiterbildung hat der Hydromotor ein konstantes Verdrängungsvolumen, wodurch die oben genannten Bilanzen und Abschätzungen vergleichsweise einfach ausführbar sind. Alternativ hat er ein verstellbares Verdrängungsvolumen. Zur Ausführung der Bilanzen ist dann vorzugsweise eine zusätzliche Erfassungseinrichtung für sein Verdrängungsvolumen und/oder eine Abschätzeinrichtung zu dessen Abschätzung vorgesehen.

Ein geschwindigkeitsgeführter hydrostatischer Fahrantrieb, insbesondere für eine mobile Arbeitsmaschine, hat eine Axialkolbenpumpe, die gemäß wenigstens einem Aspekt der vorangegangenen Beschreibung ausgestaltet ist. Sie ist mit einem Hydromotor in, insbesondere geschlossenem, hydraulischem Kreis fluidisch verbunden und mit einer Antriebsmaschine, insbesondere einer Verbrennungskraftmaschine, gekoppelt oder koppelbar. Der Hydromotor ist mit einem Abtrieb, insbesondere einem Rad, einer Achse oder Kette gekoppelt oder koppelbar.

Ein Verfahren zur Steuerung der Axialkolbenpumpe, die gemäß wenigstens einem Aspekt der vorhergehenden Beschreibung ausgestaltet ist, hat zumindest Schritte "Modellbasiertes Ermitteln eines einer angeforderten Geschwindigkeit zugeordneten ersten Stroms", sowie "Ansteuern des ersten Elektromagneten damit". Erfindungsgemäß weist das Verfahren einen Schritt "Anpassen des Modells zumindest in Abhängigkeit der Ist-Geschwindigkeit und des ersten Stroms" auf.

Ergänzend weist es vorzugsweise einen vorgelagerten Schritt "Erfassen der angeforderten Geschwindigkeit", sowie einen Schritt "Erfassen der Ist-Geschwindigkeit" auf.

In einer Weiterbildung des Verfahrens erfolgt ein Schritt "Modellbasiertes Ausregeln einer Differenz aus angeforderter Geschwindigkeit und Ist-Geschwindigkeit, oder einer von diesen Geschwindigkeiten abhängigen Differenz".

In einer Weiterbildung des Verfahrens erfolgt ein Schritt "Anpassen des Modells oder der Modelle in Abhängigkeit zumindest der Ist-Geschwindigkeit und des ersten Stroms derart, bis das Ausregeln, insbesondere gemäß einer vorbestimmten Abbruchbedingung, entfallen kann".

In einer Weiterbildung des Verfahrens erfolgt ein Schritt "Deaktivieren der Anpassungseinrichtung in Abhängigkeit einer vorbestimmten Abbruchbedingung, und/oder Deaktivieren der Regeleinrichtung in Abhängigkeit einer vorbestimmten Abbruchbedingung".

Ein Ausführungsbeispiel einer erfindungsgemäßen hydrostatischen Axialkolbenpumpe, eines damit ausgeführten Fahrantriebes, sowie eines Verfahrens zur Steuerung der Axialkolbenpumpe sind in den Zeichnungen dargestellt. Anhand der Figuren dieser Zeichnungen wird die Erfindung nun näher erläutert.

Es zeigen:

Figur 1 einen hydraulischen Schaltplan einer erfindungsgemäßen Axialkolbenpumpe gemäß einem Ausführungsbeispiel,
Figur 2 einen logischen Schaltplan eines erfindungsgemäßen Fahrantriebes mit der Axialkolbenpumpe gemäß Figur 1 und einem darin abgelegten erfindungsgemäßen Verfahren in schwenkwinkelbasiertem Anpassungsbetrieb,
Figur 3 einen logischen Schaltplan des erfindungsgemäßen Fahrantriebes gemäß Figur 2 und dem darin abgelegten erfindungsgemäßen Verfahren in geschwindigkeitsbasiertem Anpassungsbetrieb, und
Figur 4 einen logischen Schaltplan des erfindungsgemäßen Fahrantriebes gemäß Figur 2 und 3 und dem darin abgelegten erfindungsgemäßen Verfahren in einem rein gesteuerten Betrieb.

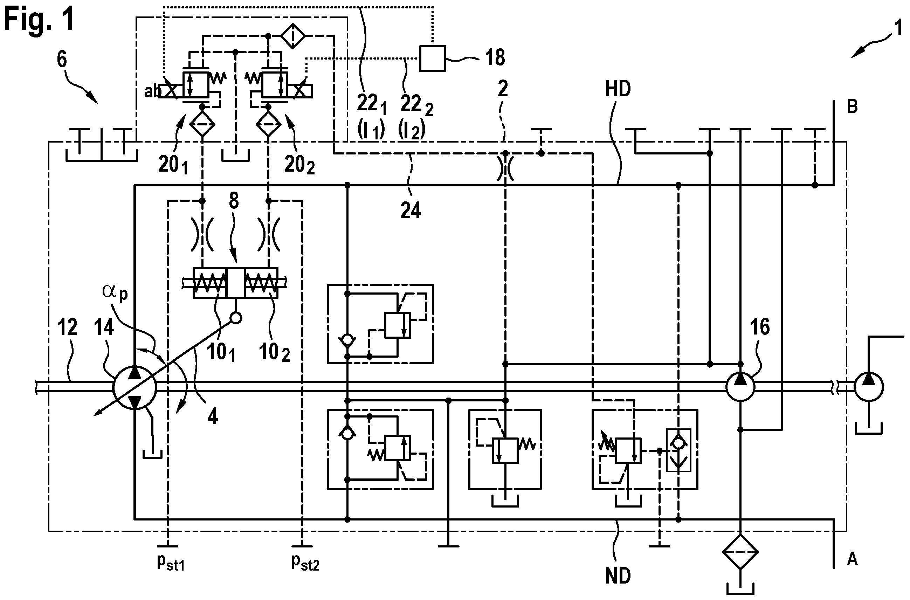

Figur 1 zeigt einen Schaltplan des Ausführungsbeispiels einer erfindungsgemäßen Axialkolbenpumpe 1. Es werden nur die für die Erfindung wesentlichen Komponenten der Axialkolbenpumpe beschrieben. Sie hat ein Gehäuse 2, an dem zwei Arbeitsanschlüsse A, B gebildet sind, an die jeweils eine (nicht gezeigte) Arbeitsleitung eines geschlossenen Kreises angeschlossen wird. Mit einem in den Kreis fluidisch eingebundenen (nicht gezeigten) Hydromotor ist so ein erfindungsgemäßer hydrostatischer Fahrantrieb für eine (nicht gezeigte) mobile Arbeitsmaschine gebildet.

Die Axialkolbenpumpe 1 ist mit einer Schrägscheibe 4 ausgeführt, deren Schwenkwinkel $\alpha_P$ über eine Verstelleinheit 6 einstellbar ist. Dazu dient ein doppeltwirkender Stellzylinder 8, der eine erste Stelldruckkammer $10_1$ und eine dem entgegenwirkende, zweite Stelldruckkammer $10_2$ aufweist.

Ein erster Steuerdruck $p_{st1}$ wirkt in der ersten Stelldruckkammer $10_1$ in Richtung einer Vergrößerung des Schwenkwinkels $\alpha_P$ und damit in Richtung einer Vergrößerung des Hubvolumens $V_P$ der Axialkolbenpumpe 1. Dem entgegen wirkt ein zweiter Stelldruck $p_{st2}$ in der zweiten Stelldruckkammer $10_2$ in Richtung einer Verkleinerung des Schwenkwinkels $\alpha_P$ und damit in Richtung einer Verringerung des Hubvolumens $V_P$ der Axialkolbenpumpe 1. Dabei lässt sich eine Stelldruckdifferenz $\Delta p_{st} = p_{st1} - p_{st2}$ definieren, wobei diese Stelldruckdifferenz $\Delta p_{st}$ definitionsgemäß im Ausführungsbeispiel stets in Richtung einer Vergrößerung des Schwenkwinkels ap, bzw. des Hubvolumens $V_P$, wirkt.

Über eine Antriebswelle 12 der Axialkolbenpumpe 1 wird deren Triebwerk 14 und darüberhinausgehend auch eine Speisepumpe 16 angetrieben. Die Antriebswelle 12 wird von einem (nicht gezeigten) Dieselmotor angetrieben und rotiert mit einer Drehzahl np. Diese Drehzahl np wirkt zusammen mit der Stelldruckdifferenz $\Delta p_{st}$ in Richtung einer Vergrößerung des Schwenkwinkels $\alpha_P$. Genauer gesagt wirkt eine Zunahme der Drehzahl np auf diese Weise.

Eine Charakteristik der Axialkolbenpumpe 1 ist in einer elektronischen Steuereinheit 18 als Formeln und/oder als Kennfelder bzw. Kennlinien hinterlegt.

Weiterhin werden die Drehzahl np und die Stelldruckdifferenz $\Delta p_{st}$ und der Hochdruck HD gemessen. Damit lassen sich Betriebspunkte der erfindungsgemäßen Axialkolbenmaschine 1 ansteuern, ohne dass dafür eine Rückkoppelung im Sinne eines Regelkreises notwendig ist.

Die beiden Stelldrücke $p_{st1}$, $p_{st2}$ werden über zwei Druckreduzierventile $20_1$, $20_2$ gesteuert. Diese haben jeweils einen elektrischen Magneten a, b, der über eine jeweilige elektrische Leitung $22_1$, $22_2$ mit der elektronischen Steuereinheit 18 verbunden sind.

Die beiden Druckreduzierventile $20_1$, $20_2$ sind derart ausgelegt, dass der jeweilige Stelldruck $p_{st1}$, $p_{st2}$ proportional zur jeweiligen Stromstärke $I_1$, $I_2$ ist.

Die beiden Druckreduzierventile $20_1$, $20_2$ werden eingangsseitig über eine Speisedruckleitung 24 von der Speisepumpe 16 versorgt.

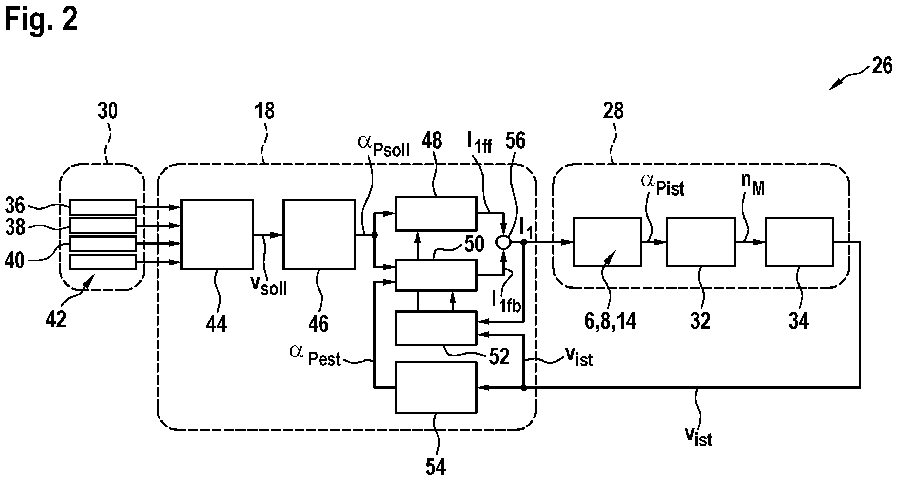

Figur 2 zeigt einen logischen Schaltplan eines hydrostatischen Fahrantriebes 26 mit der Axialkolbenpumpe 1 gemäß Figur 1, wobei diese in auf die zuvor genannten Komponenten Verstelleinheit 6, Stellzylinder 8, Triebwerk 14 und Steuereinheit 18 reduziert dargestellt ist. Der Fahrantrieb 26 hat einen Fahrantriebsstrang 28, sowie eine Bedienerschnittstelle 30. Der Fahrantriebsstrang 28 enthält die in ihrem Hubvolumen $V_P = f(\alpha_P)$ verstellbare Axialkolbenpumpe 6, 8, 14 und einen mit konstantem Verdrängungsvolumen $V_M$ ausgestalteten Hydromotor 32. Beide sind wie vorbeschrieben in geschlossenem, hydraulischem Kreis angeordnet. Der Fahrantriebsstrang 28 hat des Weiteren eine Erfassungseinrichtung 34 zur Erfassung des Ist-Wertes einer Fahrgeschwindigkeit $v_{ist}$.

Die Bedienerschnittstelle 30 (HMI) hat zur Definition einer Geschwindigkeitsanforderung ein Fahrpedal 36, ein Inchpedal 38, ein Cruise Control 40, sowie weitere Bedienelemente 42.

Die Steuereinheit 18 hat eine Interpretationseinrichtung 44 zur Wandlung der Geschwindigkeitsanforderung des Bedieners in eine Geschwindigkeitsvorgabe oder angeforderte Geschwindigkeit $v_{soll}$. Die Steuereinheit 18 hat zudem eine Berechnungseinrichtung 46 zur Berechnung eines angeforderten Schwenkwinkels $\alpha_{P,Soll}$ der Axialkolbenpumpe 1 gemäß Figur 1 aus der angeforderten Geschwindigkeit $v_{soll}$.

Des Weiteren hat die Steuereinheit 18 eine Steuereinrichtung 48, eine dieser überlagerbare oder überlagerte Regeleinrichtung 50, eine Anpassungseinrichtung 52, sowie eine Abschätzeinrichtung 54.

Gemäß Figur 2 erfolgt eine Auslenkung des Fahrpedals 36, das mit der Interpretationseinrichtung 44 signalverbunden ist. Diese wandelt den Fahrerwunsch in eine angeforderte Geschwindigkeit $v_{soll}$ um, die in die Berechnungseinrichtung 46 eingeht. Hierin erfolgt, unter Annahme eines Konstantmotors 32 mit konstantem Verdrängungsvolumen $V_M$, die Berechnung eines entsprechenden Sollschwenkwinkels $\alpha_{Psoll}$. Dieser geht in die Steuereinrichtung 48 und in die Regeleinrichtung 50 ein. In beiden Einrichtungen 48, 50 sind Kennfelder und jeweils ein Modell des ersten Stroms $I_1$ in Abhängigkeit des angeforderten Schwenkwinkels $\alpha_{Psoll}$, das heißt mittelbar in Abhängigkeit der angeforderten Geschwindigkeit $v_{soll}$, abgelegt. Die Einrichtungen 48, 50 ermitteln aus dem jeweiligen Modell und Kennfeld erste Ausgabewerte Iiff bezüglich Steuerung ("feed-forward") und $I_{1fb}$ bezüglich Regelung ("feed-back"). Beide Ausgabewerte Iiff und $I_{1fb}$ werden dann an einem ersten Operator 56 zum ersten Strom $I_1$ addiert. Dieser steuert per elektrischer Leitung $22_1$ gemäß Figur 1 den ersten Elektromagneten a an und bewirkt dort über das damit angesteuerte erste Druckreduzierventil $20_1$ einen ersten Stelldruck $p_{st1}$ in dem ersten Stelldruckraum ($10_1$). An der Axialkolbenpumpe 6, 8, 14 gemäß Figur 2 resultiert daraus ein Ist-Schwenkwinkel $\alpha_{Pist}$, der bei der Drehzahl np der Axialkolbenpumpe und Antriebsmaschine zu einem Druckmittelvolumenstrom $Q_P$ führt. Über die oben genannte Bilanz resultiert daraus am Hydromotor 32 die Abtriebsdrehzahl $n_M$ die zu der Ist-Geschwindigkeit $v_{ist}$ proportional ist. Letztgenannte wird von der Erfassungseinrichtung 34 erfasst und an die Abschätzeinrichtung 54 gemeldet. Diese schätzt den Ist-Schwenkwinkel, da dieser nicht erfasst wird, ab. Der abgeschätzte Ist-Schwenkwinkel ist als $\alpha_{Pest}$ bezeichnet. Er geht in die Regeleinrichtung 50 als zweite Eingangsgröße, neben dem Sollwert $\alpha_{Psoll}$ des Schwenkwinkels, ein. Auf diese Weise kann auf die teure Erfassung des Ist-Schwenkwinkels $\alpha_{Pist}$ verzichtet werden und dennoch eine Regelung stattfinden. Zudem geht die Ist-Geschwindigkeit $v_{ist}$ in die Anpassungseinrichtung 52 zusammen mit dem ihr zugrundeliegenden, ersten Strom $I_1$ ein. Der dort abgelegte Lern- und Anpassungsalgorithmus verändert im Zuge dessen die Modellparameter der in den Einrichtungen 48 und 50 abgelegten Modelle und/oder die Kennfelder des ersten Stroms $I_1$, so dass mit zunehmender Anpassung der erste Ausgabewert $I_{1fb}$ der Regeleinrichtung 50 immer kleiner wird, die Regelung also abnimmt.

Die Anpassungseinrichtung 52 ist vorzugsweise derart ausgestaltet, dass sich im Laufe des Anpassungsbetriebes eine immer bessere Übereinstimmung zwischen verwendeten und tatsächlich vorliegenden Parametern der Modelle ergibt.

Auf diese Weise können auch Alterungseffekte der Komponenten in der Steuerung der Axialkolbenpumpe 1 berücksichtigt werden. Es ergibt sich ein gleichbleibend gutes Fahrverhalten.

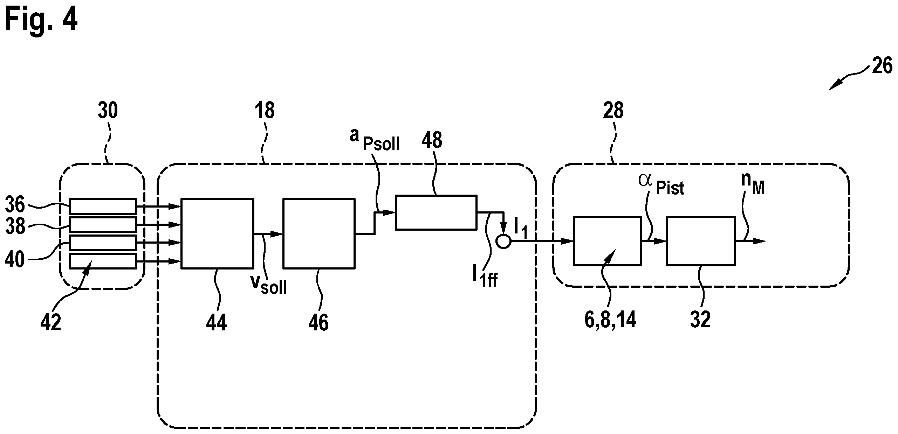

Durch das geschilderte Anpassen der Kennfelder und/oder Parameter verbessert sich insbesondere die Steuerung mittels der Steuereinrichtung 48 immer weiter, so dass ab einem gewissen Zeitpunkt oder Abbruchkriterium auf die Regelung durch die Regeleinrichtung 50 vollständig verzichtet werden kann. Dieser Fall ist in Figur 4 dargestellt. Die Regeleinrichtung 50, sowie die Anpassungseinrichtung 52 und die Abschätzeinrichtung 54 sind dann deaktiviert (grafisch nicht dargestellt).

Da dann nur noch gesteuert und nicht mehr geregelt wird, weisen die Axialkolbenpumpe und der Fahrantrieb eine Robustheit beispielsweise gegen Sensorausfall auf. In diesem Fall kann dann auf eine Messung der Ist-Geschwindigkeit $v_{ist}$, verzichtet werden. Der Verzicht auf Sensorik ist hoch zu bewerten, da ein jederzeit möglicher Sensorausfall üblicher Weise sehr ungünstige Auswirkungen auf die Geschwindigkeitsführung hat.

Zum Erlernen der benötigten Parameter und Kennfelder kann sich in der Lern- und Anpassungsphase jedoch eine zeitweilige Verwendung eines Sensors für die Ist-Geschwindigkeit $v_{ist}$ und eines Schwenkwinkelsensors für den Ist-Schwenkwinkel $\alpha_{ist}$ als sinnvoll erweisen, um die Lern- und Anpassungsphase zu verkürzen.

Das Anpassen der Parameter und/oder der Kennfelder kann durch einen Schritt "lokale Anpassung von Punkten im Kennfeld" und/oder einen Schritt "Verschiebung von Kennlinien" erfolgen. Vorteil der Kennlinienverschiebung ist, dass auch Punkte, die nicht im Betrieb angefahren werden, mit adaptiert werden. Hierfür ist ein Modellansatz notwendig, der beispielsweise einen linearen Zusammenhang der abzuschätzenden Größe mit dem Schwenkwinkel beschreibt. Nachteilig an der Kennlinienverschiebung kann sein, dass es zu einer Verschlechterung mancher Punkte kommt, falls der angenommene Zusammenhang (bspw. lineare Zusammenhang) nicht zutrifft.

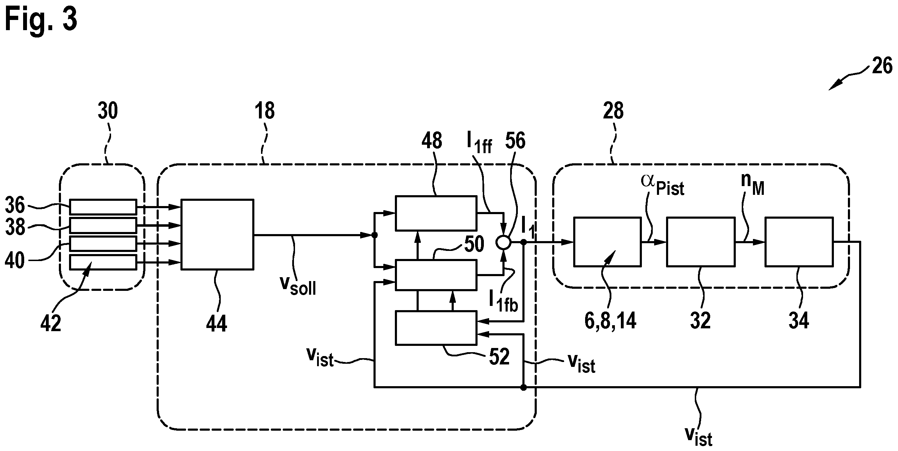

Figur 3 zeigt eine Variante des Fahrantriebes 26 gemäß Figur 2, bei der die Ermittlungen des Schwenkwinkels $\alpha_{Psoll}$ aus der angeforderten Geschwindigkeit $v_{soll}$ und des abgeschätzten Ist-Schwenkwinkels $\alpha_{pest}$ aus der Ist-Geschwindigkeit $v_{ist}$ entfallen, da die Steuereinrichtung 48 und die Regeleinrichtung 50 unmittelbar geschwindigkeitsabhängig wirksam sind, also ohne eine Rekonstruktion des Schwenkwinkels $\alpha$ aus der Geschwindigkeit $v$. In diesem Fall geht die Ist-Geschwindigkeit $v_{ist}$ direkt in die Regeleinrichtung 50 und die Soll-Geschwindigkeit $v_{soll}$ direkt in die Steuereinrichtung 48 und die Regeleinrichtung 50 ein.

Vorteile der Erfindung sind eine Vereinfachung und Kostenreduktion durch Entfall einer EP-geregelten Pumpe, eine verbesserte Leistung durch präzise Geschwindigkeitsfolge, ein reduzierter Inbetriebnahmeaufwand, da benötigte Parameter selbstständig eingestellt und erlernt werden, eine Erhöhung der Sicherheit, da eine messtechnische Erfassung nur zeitweilig benötigt wird und nach Inbetriebnahme ein rein gesteuerter Betrieb möglich wird, sowie das Erreichen eines über die Lebenszeit gleichbleibenden Maschinenverhaltens bei fortlaufender Verwendung der Anpassungseinrichtung 52, da Verschleißeffekte durch die Anpassung der Parameter und/oder der Kennfelder in der Fahrzeugsteuerung kompensiert werden.

Offenbart ist eine Axialkolbenpumpe für einen hydrostatischen Fahrantrieb, mit einem hydraulisch verstellbaren Hubvolumen und einer Verstelleinheit dafür, wobei proportional zu einem Verstellstrom ein Verstelldruck der Verstelleinheit wirksam ist, von dem das Hubvolumen und mittelbar ein Volumenstrom und eine Fahrgeschwindigkeit abhängen. Dabei ist eine Steuereinrichtung vorgesehen, in der ein Modell und/oder ein Kennfeld des Verstellstroms in Abhängigkeit einer angeforderten Geschwindigkeit abgelegt ist. Erfindungsgemäß ist eine Lern- und/oder Anpassungseinrichtung vorgesehen, über die in Abhängigkeit des Verstellstroms und einer diesem zuordenbaren oder zugeordneten Ist-Geschwindigkeit das Modell und/oder Kennfeld anpassbar ist.

Offenbart ist zudem ein hydrostatischer Fahrantrieb mit der Axialkolbenpumpe. Offenbart ist weiterhin eine mobile Arbeitsmaschine, insbesondere ein Kommunalfahrzeug, ein Radlader, eine Landmaschine, wie beispielsweise ein Sprayer oder ein Mähdrescher, oder dergleichen, mit einem derartigen hydrostatischen Fahrantrieb. Offenbart ist zudem ein Verfahren zur Steuerung der Axialkolbenpumpe und/oder des Fahrantriebes.

**Patentansprüche**

1. Hydrostatische Axialkolbenpumpe für einen geschwindigkeitsgeführten hydrostatischen Fahrantrieb(26), die ein verstellbares Hubvolumen ($V_P$), aufweist und zur fluidischen Verbindung mit einem Hydromotor (32) in, insbesondere geschlossenem, hydraulischem Kreis vorgesehen ist, und die zur Verstellung des Hubvolumens ($V_P$) eine Verstelleinheit (6) hat, die einen Stellzylinder (8) mit einer ersten Stelldruckkammer ($10_1$) hat, in der über ein erstes Druckreduzierventil ($20_1$) ein erster Stelldruck ($p_{st1}$) einstellbar ist, der abhängig von einem ersten Strom ($I_1$) an einem ersten Elektromagneten (a) des ersten Druckreduzierventils ($20_1$) ist, und die eine elektronische Steuereinrichtung (48) hat, in der ein Modell des ersten Stroms ($I_1$) in Abhängigkeit einer anforderbaren oder angeforderten Geschwindigkeit ($v_{soll}$) abgelegt ist, **gekennzeichnet durch** eine Anpassungseinrichtung (52), die derart ausgestaltet ist, dass über sie in Abhängigkeit des ersten Stroms ($I_1$) und einer diesem zuordenbaren oder zugeordneten Ist-Geschwindigkeit ($v_{ist}$) das Modell anpassbar ist.

2. Axialkolbenpumpe nach Anspruch 1 mit einer Regeleinrichtung (50), über die eine Abweichung der Ist-Geschwindigkeit ($v_{ist}$) von der angeforderten Geschwindigkeit ($v_{soll}$) ausregelbar ist,

3. Axialkolbenpumpe nach Anspruch 2, wobei erste Ausgabewerte ($I_{1fb}$, $I_{1ff}$) der Regeleinrichtung (50) und der Steuereinrichtung (48) über einen ersten Operator (56) zum ersten Strom ($I_1$) verknüpfbar oder verknüpft sind.

4. Axialkolbenpumpe nach Anspruch 2 oder 3, wobei die Anpassungseinrichtung (52) derart ausgestaltet ist, dass über sie in Abhängigkeit des ersten Stroms ($I_1$) und der dieser zuordenbaren oder zugeordneten Ist-Geschwindigkeit ($v_{ist}$) ein Modell der Regeleinrichtung (50) anpassbar ist.

5. Axialkolbenpumpe nach einem der Ansprüche 2 bis 4, wobei die Anpassungseinrichtung (52) derart ausgestaltet ist, dass über sie das Modell der Steuereinrichtung (48) und ein Modell der Regeleinrichtung (50) derart anpassbar sind, dass ein erster Ausgabewert ($I_{1fb}$) der Regeleinrichtung (50) minimierbar, nahe null oder null ist oder mit Bezug zum ersten Ausgabewert ($I_{1ff}$) der Steuereinrichtung (48) vernachlässigbar ist.

6. Axialkolbenpumpe nach Anspruch 2 oder einem darauf rückbezogenen Anspruch, wobei die Regeleinrichtung (50) deaktivierbar ausgestaltet ist, insbesondere im Anschluss an einen Anpassungsbetrieb oder eine Inbetriebnahme.

7. Axialkolbenpumpe nach einem der vorhergehenden Ansprüche, wobei die Anpassungseinrichtung (52) deaktivierbar ausgestaltet ist, insbesondere im Anschluss an einen Anpassungsbetrieb oder eine Inbetriebnahme.

8. Axialkolbenpumpe nach einem der vorhergehenden Ansprüche, wobei die Anpassungseinrichtung (52) eine Abbruchbedingung der Anpassung zumindest in Abhängigkeit des ersten Stroms ($I_1$) und der zuordenbaren oder zugeordneten Ist-Geschwindigkeit ($v_{ist}$) hat.

9. Axialkolbenpumpe nach einem der vorhergehenden Ansprüche, wobei das jeweilige Modell jeweils einen statischen Anteil und einen dynamischen Anteil hat.

10. Hydrostatischer Fahrantrieb mit einer Axialkolbenpumpe (1), die gemäß einem der vorhergehenden Ansprüche ausgestaltet ist, und die mit einem Hydromotor (32) in, insbesondere geschlossenem, hydraulischem Kreis fluidisch verbunden ist, wobei die Axialkolbenpumpe (1) mit einer Antriebsmaschine und der Hydromotor (32) mit einem Abtrieb gekoppelt oder koppelbar ist.

11. Verfahren zur Steuerung einer Axialkolbenpumpe (1) gemäß einem der Ansprüche 1 bis 9 und/oder eines Fahrantriebes (26) gemäß Anspruch 10, mit Schritten

   - Modellbasiertes Ermitteln zumindest eines einer angeforderten Geschwindigkeit ($v_{soll}$) zugeordneten ersten Stroms ($I_1$),
   - Ansteuern des ersten Elektromagneten (a) damit, **gekennzeichnet durch** einen Schritt
   - Anpassen des Modells in Abhängigkeit einer Ist-Geschwindigkeit ($v_{ist}$) und zumindest des ersten Stroms ($I_1$).


**Claims**

1. Hydrostatic axial piston pump for a speed-controlled hydrostatic propulsion drive (26), which hydrostatic axial piston pump has an adjustable swept volume ($V_P$), is provided in an, in particular closed, hydraulic circuit for the fluidic connection to a hydraulic motor (32), and, for the adjustment of the swept volume ($V_P$), has an adjusting unit (6) which has an actuating cylinder (8) with a first actuating pressure chamber ($10_1$), in which a first actuating pressure ($p_{st1}$) can be set via a first pressure reducing valve ($20_1$), which first actuating pressure ($p_{st1}$) is dependent on a first current ($I_1$) at a first electromagnet (a) of the first pressure reducing valve ($20_1$), and which hydrostatic axial piston pump has an electronic control device (48), in which a model of the first current ($I_1$) is stored in a manner which is dependent on a speed ($v_{soll}$) which can be requested or is requested, **characterized by** an adaptation device (52) which is configured in such a way that the model can be adapted via it in a manner which is dependent on the first current ($I_1$) and an actual speed ($v_{ist}$) which can be assigned or is assigned to it.

2. Axial piston pump according to Claim 1 with a regulating device (50), via which a deviation of the actual speed ($v_{ist}$) from the requested speed ($v_{soll}$) can be corrected.

3. Axial piston pump according to Claim 2, first output values ($I_{1fb}$, $I_{1ff}$) of the regulating device (50) and the control device (48) being capable of being linked or being linked to the first current ($I_1$) via a first operator (56).

4. Axial piston pump according to Claim 2 or 3, the adaptation device (52) being configured in such a way that a model of the regulating device (50) can be adapted via it in a manner which is dependent on the first current ($I_1$) and the actual speed ($v_{ist}$) which can be assigned or is assigned to it.

5. Axial piston pump according to one of Claims 2 to 4, the adaptation device (52) being configured in such a way that the model of the control device (48) and a model of the regulating device (50) can be adapted via it in such a way that a first output value ($I_{1fb}$) of the regulating device (50) can be minimized, is close to zero or is zero, or is negligible in relation to the first output value ($I_{1ff}$) of the control device (48).

6. Axial piston pump according to Claim 2 or a claim which refers back to it, the regulating device (50) being configured such that it can be deactivated, in particular following an adaptation operation or a start up.

7. Axial piston pump according to one of the preceding claims, the adaptation device (52) being configured such that it can be deactivated, in particular following an adaptation operation or a start up.

8. Axial piston pump according to one of the preceding claims, the adaptation device (52) having a cancelation condition of the adaptation at least in a manner which is dependent on the first current ($I_1$) and the actual speed ($v_{ist}$) which can be assigned or is assigned.

9. Axial piston pump according to one of the preceding claims, the respective model in each case having a static part and a dynamic part.

10. Hydrostatic propulsion drive with an axial piston pump (1) which is configured according to one of the preceding claims, and which is connected fluidically to a hydraulic motor (32) in an, in particular closed, hydraulic circuit, the axial piston pump (1) being coupled or being capable of being coupled to a drive machine, and the hydraulic motor (32) being coupled or being capable of being coupled to an output.

11. Method for controlling an axial piston pump (1) according to one of Claims 1 to 9 and/or a propulsion drive (26) according to Claim 10, having the steps

- model-based determination of at least a first current ($I_1$) which is assigned to a requested speed ($v_{soll}$),
- actuation of the first electromagnet (a) by way of it,

**characterized by** a step

- adaptation of the model in a manner which is dependent on an actual speed ($v_{ist}$) and at least the first current ($I_1$).

**Revendications**

1. Pompe à pistons axiaux hydrostatique pour un système d'entraînement hydrostatique (26) asservi à la vitesse, qui présente un déplacement de piston ($V_P$) réglable et est prévue pour la communication fluidique avec un moteur hydraulique (32) dans un circuit hydraulique en particulier fermé, et qui présente pour le réglage du volume de piston ($V_P$) une unité de réglage (6) qui présente un vérin (8) doté d'une première chambre de pression de commande ($10_1$) dans laquelle un premier réducteur de pression ($20_1$) permet de régler une première pression de commande ($p_{st1}$) qui dépend d'un premier courant ($I_1$) au niveau d'un premier électroaimant (a) du premier réducteur de pression ($20_1$), et qui présente un dispositif de commande électronique (48) dans lequel est enregistré un modèle du premier courant ($I_1$) en fonction d'une vitesse pouvant être ou étant demandée ($v_{soll}$),
**caractérisée par** un dispositif d'adaptation (52) qui est configuré de telle sorte qu'il permet d'adapter le modèle en fonction du premier courant ($I_1$) et d'une vitesse réelle ($v_{ist}$) pouvant être ou étant associée à celui-ci.

2. Pompe à pistons axiaux selon la revendication 1, comprenant un dispositif de régulation (50) permettant de réguler parfaitement un écart de la vitesse réelle ($v_{ist}$) par rapport à la vitesse demandée ($v_{soll}$).

3. Pompe à pistons axiaux selon la revendication 2, dans laquelle des premières valeurs de sortie ($I_{1fb}$, $I_{1ff}$) du dispositif de régulation (50) et du dispositif de commande (48) peuvent être ou sont associées au premier courant ($I_1$) par un premier opérateur (56).

4. Pompe à pistons axiaux selon la revendication 2 ou 3, dans laquelle le dispositif d'adaptation (52) est configuré de telle sorte qu'il permet d'adapter un modèle du dispositif de régulation (50) en fonction du premier courant ($I_1$) et de la vitesse réelle ($v_{ist}$) pouvant être ou étant associée à celui-ci.

5. Pompe à pistons axiaux selon l'une quelconque des revendications 2 à 4, dans laquelle le dispositif d'adaptation (52) est configuré de telle sorte qu'il permet d'adapter le modèle du dispositif de commande (48) et un modèle du dispositif de régulation (50) de telle sorte qu'une première valeur de sortie ($I_{1fb}$) du dispositif de régulation (50) peut être minimisée, est proche de zéro ou égale à zéro, ou est négligeable relativement à la première valeur de sortie ($I_{1ff}$) du dispositif de commande (48).

6. Pompe à pistons axiaux selon la revendication 2 ou une revendication qui en dépend, dans laquelle le dispositif de régulation (50) est configuré de manière à pouvoir être désactivé, en particulier suite à un fonctionnement d'adaptation ou à une mise en service.

7. Pompe à pistons axiaux selon l'une quelconque des revendications précédentes, dans laquelle le dispositif d'adaptation (52) est configuré de manière à pouvoir être désactivé, en particulier suite à un fonctionnement d'adaptation ou à une mise en service.

8. Pompe à pistons axiaux selon l'une quelconque des revendications précédentes, dans laquelle le dispositif d'adaptation (52) présente une condition d'annulation de l'adaptation au moins en fonction d'un premier courant ($I_1$) et de la vitesse réelle ($v_{ist}$) pouvant être ou étant associée.

9. Pompe à pistons axiaux selon l'une quelconque des revendications précédentes, dans laquelle le modèle respectif présente respectivement une partie statique et une partie dynamique.

10. Mécanisme d'entraînement hydrostatique comprenant une pompe à pistons axiaux (1) qui est configurée selon l'une quelconque des revendications précédentes et qui est en communication fluidique avec un moteur hydraulique (32) dans un circuit hydraulique en particulier fermé, la pompe à pistons axiaux (1) étant ou pouvant être couplée à une machine d'entraînement, et le moteur hydraulique (32) étant ou pouvant être couplé à un système d'entraînement de sortie.

11. Procédé de commande d'une pompe à pistons axiaux (1) selon l'une quelconque des revendications 1 à 9 et/ou d'un système d'entraînement (26) selon la revendication 10, comprenant les étapes consistant à :

   - établir sur la base d'un modèle au moins un premier courant ($I_1$) associé à une vitesse demandée ($v_{soll}$),
   - piloter le premier électroaimant (a) à l'aide de celui-ci,

   **caractérisé par** l'étape consistant à

   - adapter le modèle en fonction d'une vitesse réelle ($v_{ist}$) et au moins du premier courant ($I_1$).

Fig. 1

EP 3 726 053 B1

## Fig. 2

EP 3 726 053 B1

# Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2123948 A1